# FASCICULE DE BREVET EUROPEEN

(11) **EP 3 140 677 B1**
(45) Date de publication et mention de la délivrance du brevet: **27.06.2018**
(21) Numéro de dépôt: 15718561.2
(22) Date de dépôt: 09.04.2015
(51) Int. Cl.: G01V 1/36, G01V 1/32, G01V 1/30

(54) **PROCÉDÉ DE TRAITEMENT D'IMAGES SISMIQUES**
VERFAHREN ZUR VERARBEITUNG VON SEISMISCHEN BILDERN
METHOD FOR PROCESSING SEISMIC IMAGES

(30) Priorité: 14.04.2014 FR 1453327
(43) Date de publication de la demande: 15.03.2017
(73) Titulaire: Total SA, 92400 Courbevoie (FR)
(72) Inventeur: AUDEBERT, François, 64000 Pau (FR)
(74) Mandataire: Cabinet Plasseraud
(86) Numéro de dépôt international: PCT/FR2015/050962
(87) Numéro de publication internationale: WO 2015/159000

(56) Documents cités:
- WO-A1-2014/018704
- US-A1- 2007 247 972
- US-A1- 2008 106 971
- US-A1- 2008 291 781
- BIN WANG ET AL: "3D Sub-salt tomography based on wave equation migration perturbation scans", SEG TECHNICAL PROGRAM EXPANDED ABSTRACTS 2004, 1 janvier 2004 (2004-01-01), pages 2375-2378, XP055159416, DOI: 10.1190/1.1839699

## Description

### DOMAINE TECHNIQUE

L'invention se rapporte au domaine du traitement d'images sismiques. Il se rapporte plus particulièrement à la comparaison de deux images d'un même milieu prises à des instants différents en vue d'identifier des changements dans le milieu imagé.

### ARRIÈRE-PLAN TECHNOLOGIQUE

L'imagerie sismique fait intervenir des ondes acoustiques émises en mer ou en surface et qui se propagent à travers un milieu en y subissant entre autres des réflexions et réfractions. Ces ondes sont ensuite enregistrées sous forme de signaux à l'aide de capteurs tels que des géophones. Ces signaux se présentent sous la forme de traces sismiques représentant les variations d'amplitude d'une onde en fonction du temps.

Pour suivre l'évolution dans le temps d'un milieu géologique, l'imagerie sismique procède par acquisitions successives de données sismiques avec les mêmes sources et détecteurs. Il est courant de se référer à de tels suivis en parlant « d'imagerie sismique quadridimensionnelle ou 4D ». De tels suivis se révèlent utiles pour la surveillance des gisements d'hydrocarbures. Il est par exemple souhaitable de connaître l'influence d'une exploitation sur les propriétés de réservoirs de pétrole ou de gaz, en vue de prévenir d'éventuels effondrements.

L'exploitation d'un gisement provoque une diminution de la quantité d'hydrocarbures présente dans un réservoir, ce qui peut affecter la composition des roches environnantes et perturbe les vitesses de propagation d'ondes sismiques traversant ce milieu modifié. Ces changements se répercutent au niveau des détecteurs par des temps d'arrivée enregistrés différents, invitant à remettre à jour le modèle de vitesse utilisé pour modéliser la propagation des ondes sismiques dans le milieu imagé et construire une représentation de ce milieu.

Cependant, un tel suivi implique des traitements numériques pouvant être longs du fait du volume important de données accumulées. Par ailleurs, le suivi souffre généralement d'imprécisions du fait de la difficulté existante à identifier les faibles variations qui surviennent entre deux acquisitions. Il est donc en particulier recherché un compromis entre vitesse, simplicité de traitement et précision.

Le procédé d'imagerie sismique par lequel un modèle physique est obtenu à partir de données sismiques est un procédé dit d'inversion. Différents procédés d'inversion ont été proposés pour réaliser de l'imagerie 4D.

Une technique simpliste consiste à considérer toutes les interfaces réfléchissant les ondes sismiques, aussi appelées réflecteurs, comme étant des réflecteurs plans dans le milieu imagé, et d'effectuer de l'imagerie à une dimension, dite imagerie 1D. Cette méthode présente l'avantage d'être rapide, mais très insuffisante car la fiabilité de l'image se dégrade rapidement avec la profondeur. De plus, elle ne fournit que des informations suivant un axe alors qu'une représentation en trois dimensions est recherchée. Il est possible, à titre d'exemple de procédés employant des techniques d'imagerie 1D, de consulter les brevets FR10/55945 et FR10/57508 définissant respectivement une méthode numérique permettant de modéliser des changements dans un modèle stratifié et une méthode permettant d'extrapoler un modèle 3D à partir de mesures le long de puits 1D.

Une version perfectionnée de l'imagerie 1D consiste à orienter l'axe de détection perpendiculairement à une interface ou un ensemble d'interfaces d'inclinaison non nulle connue. Cette technique s'avère cependant inefficace pour détecter des structures complexes par exemple des réservoirs en forme de dômes, ou bien d'imager avec une précision suffisante les milieux possédant des réflecteurs d'inclinaison variable.

Une autre approche consiste à résoudre un problème complet d'inversion en trois dimensions à partir d'une pluralité de signaux sismiques émis dans les trois directions de l'espace. Cette technique dite de « full-wave inversion » selon la terminologie anglo-saxonne permet de recouper des informations redondantes et d'obtenir une image en trois dimensions plus réaliste du milieu. Cependant, elle s'avère extrêmement coûteuse en temps. La lenteur de cette technique ne la rend en pratique applicable qu'à de faibles fréquences d'au plus 15 Hz. En définitive, cette technique n'est donc pas sensible à de faibles changements du milieu intervenant à des échelles inférieures à la longueur d'onde des ondes sismiques utilisées.

Le document WO2014/018704 divulgue un procédé de traitement d'une image sismique de référence d'un milieu et d'une image sismique de contrôle dudit milieu.

Le document US2008291781 divulgue un procédé similaire de traitement des données sismiques.

Le document "3D Sub-salt tomography based on wave équation migration perturbation scan" (Bin Wang et. al. SEG Technical Program, expanded abstracts, 2004) décrit une technique de demigration des traces sismiques. Par conséquent, il est recherché une technique d'inversion adaptée pour l'imagerie 4D qui soit rapide tout en offrant une précision et une résolution suffisantes pour être en mesure de détecter des réservoirs possédant des structures complexes, par exemple en forme de dôme.

### EXPOSE DE L'INVENTION

Pour répondre aux problèmes exposés ci-avant, la présente invention propose un procédé mis en oeuvre sur un processeur de traitement d'une image sismique de référence d'un milieu et d'une image sismique de contrôle dudit milieu. L'image sismique de référence comprend au moins une trace sismique décrite dans une échelle profondeur et l'image sismique de contrôle comprend au moins une trace sismique décrite dans l'échelle profondeur. Le procédé comprend les étapes suivantes :
a) recevoir l'image sismique de référence et l'image sismique de contrôle ; et
b) définir au moins un premier niveau de capture plan situé sur l'une des traces parmi la trace sismique de l'image de référence et la trace sismique de l'image de contrôle, et au moins un deuxième niveau de capture plan sur la trace sismique de l'image de référence ; et
c) transformer une portion continue de la trace sismique de l'image de contrôle par démigration sur le premier niveau de capture à l'aide d'un modèle de vitesse d'origine, en une trace sismique de contrôle transformée décrite dans une échelle temps ; et
d) transformer une portion continue de la trace sismique de l'image de référence comprenant le deuxième niveau de capture par démigration sur le deuxième niveau de capture à l'aide d'un modèle de vitesse courant, en portion de trace sismique de référence transformée décrite dans l'échelle temps ; et
e) corriger la portion de la trace sismique de contrôle transformée par étalonnage sur le deuxième niveau de capture à l'aide du modèle de vitesse courant en une nouvelle portion de trace sismique de contrôle transformée décrite dans l'échelle temps ; et
f) déterminer un modèle de vitesse courant optimisé par ajout, au modèle de vitesse courant, d'un facteur correctif du modèle de vitesse courant déterminé à partir d'un décalage en temps entre la portion de la trace sismique de référence transformée et la nouvelle portion de trace sismique de contrôle transformée.

L'invention traite ainsi deux images différentes d'un même milieu afin d'extraire un modèle de vitesse adapté pour modéliser fidèlement le milieu à partir des données de l'image de contrôle. L'image de référence et l'image de contrôle peuvent notamment différer en ce qu'elles sont des représentations du milieu à des instants différents. Ainsi, le modèle de vitesse obtenu par le procédé permet de fournir une image fiable du milieu de l'image de contrôle. Une comparaison entre plusieurs images prises à des instants différents permet de suivre les changements survenus dans le milieu, par exemple des changements liés à l'exploitation d'un gisement d'hydrocarbures.

Le procédé permet d'obtenir un modèle de vitesse optimisé par des techniques de traitement rapides, telles que par exemple des techniques d'imagerie profondeur à déport nul (imagerie profondeur « zéro-offset » selon la terminologie anglo-saxonne) et pouvant offrir une résolution suffisante avec des outils de post-traitement usuellement utilisés en sismique 4D, basés sur des hypothèses 1D. L'un des avantages de l'invention par rapport à l'art antérieur consiste en ce qu'aucune hypothèse réductrice 1D n'est faite sur la structure du sous-sol ou milieu imagé. L'invention implique l'utilisation de techniques de traitement 4D fournissant des résultats précis tout en bénéficiant d'avantages en termes de simplicité de calcul que l'on retrouve traditionnellement dans des calculs 1D. Pour ce faire, le procédé définit des niveaux plans sur les traces sismiques des images acquises, en échelle profondeur, afin d'appliquer une correction par étalonnage aux données, technique couramment appelé « datuming » en anglais. Le « datuming » consiste à transporter et réécrire ces données, en domaine temps à un autre niveau plan de capture défini par l'utilisateur comme si elles étaient enregistrées à ce niveau de capture. L'invention utilise également la démigration, qui est une autre technique similaire au « datuming ». Une transformation par démigration consiste à convertir des images en échelle profondeur en des données en échelle temps, comme si elles avaient été enregistrées à un niveau de référence plan défini par l'utilisateur.

Le procédé transforme avantageusement des données issues de deux images différentes en échelle profondeur en vue de les rendre comparables, par l'utilisation d'un même modèle de vitesse courant pour transformer des mêmes portions de traces sismiques comprenant un niveau de capture prédéfini faisant office d'origine des temps après démigration ou « datuming ». Les portions de traces sismiques traitées peuvent être comprises entre niveaux formant des bornes délimitant lesdites portions, ces bornes pouvant être définies par un utilisateur du procédé. L'obtention d'un facteur correctif du modèle de vitesse courant à l'étape g) peut être mise en oeuvre par des techniques connues, notamment en évaluant le décalage en temps entre le signal de la portion de la trace sismique de référence transformée et la nouvelle portion de trace sismique de contrôle transformée par exemple à l'aide d'une corrélation de ces deux portions.

L'invention confère un autre avantage par rapport aux techniques antérieures de post-traitement des images 4D, qui reposaient sur des hypothèses de milieu 1D pour le suivi dans le temps de l'évolution d'un milieu. En effet, l'invention permet d'utiliser des outils standard d'imagerie profondeur, plus particulièrement dans une version simple « zéro-offset » pour effectuer des opérations de démigration et « datuming ». Ces opérations permettent de gérer la propagation en milieu complexe aussi bien dans l'environnement encaissant que dans la structuration même des réservoirs cibles. L'utilisation de ces outils d'imagerie profondeur 3D dans les étapes c)-e) permet l'utilisation des outils de traitement classiques 4D afin de déterminer de façon fiable un modèle de vitesse optimisé, en présence de structures complexes, par exemple en forme de dôme.

Lorsque les images sismiques de contrôle et de référence sont composées d'une pluralité de traces sismiques, le procédé permet de reconstituer un modèle en trois dimensions du milieu.

Selon un mode de réalisation l'étape f) du procédé peut comprendre :
- calculer une fonction dv(t) représentant l'évolution dans le temps de la vitesse instantanée permettant de transformer la portion de trace sismique de référence transformée en la nouvelle portion de trace sismique de contrôle transformée ;
- transformer la fonction dv(t) en une fonction dv(z) représentant la valeur de la vitesse instantanée sur l'échelle profondeur, à l'aide du modèle de vitesse courant, la fonction dv(z) formant un facteur correctif du modèle de vitesse courant.

L'obtention d'un modèle de vitesse optimisé peut impliquer une conversion d'un facteur correctif dv(t) de la vitesse d'une échelle temps vers une échelle profondeur. Le calcul de la fonction dv(t) peut s'obtenir par un procédé couramment appelé « warping » selon la terminologie anglo-saxonne. La transformation de la fonction dv(t) en une fonction dv(z) fait intervenir un procédé couramment appelé « migration » en géophysique. Une migration de dv(t) vers dv(z) à l'aide du modèle de vitesse courant représente une manière simple et directe d'obtenir le facteur correctif dv(z) permettant de mettre à jour le modèle de vitesse courant. L'utilisation d'une migration pour obtenir le facteur correctif dv(z) constitue un perfectionnement par rapport aux approches de l'art antérieur de conversion simple, qui ne considère qu'une seule vitesse globale pour une portion de trace sismique, obtenue à partir d'un décalage en temps entre les traces.

Selon un autre mode de réalisation l'étape f) du procédé peut comprendre :
- calculer une fonction dv(t) représentant l'évolution dans le temps de la vitesse instantanée permettant de transformer la portion de trace sismique de référence transformée en la nouvelle portion de trace sismique de contrôle transformée ;
- multiplier la fonction dv(t) par l'une quelconque des traces sismiques décrites dans l'échelle temps, ladite trace sismique décrite dans l'échelle temps formant une trace support ;
- transformer à partir du modèle de vitesse courant la trace support et la trace support multipliée par la fonction dv(t) en des deuxièmes et troisièmes traces transformées décrites dans l'échelle profondeur;
- déterminer un facteur correctif dv(z) représentant la valeur de la vitesse instantanée sur l'échelle profondeur, du modèle de vitesse courant, ledit facteur étant le rapport entre les deuxièmes et troisièmes traces transformées décrites dans l'échelle profondeur.

Cette approche alternative d'obtention du facteur correctif dv(z) du modèle de vitesse s'appuie sur une technique couramment appelée « migration d'attributs ». Elle peut fournir des résultats plus précis, de façon plus robuste et moins bruitée.

De manière avantageuse, les traces sismiques de contrôle et de référence peuvent être des traces correspondant à des profils sismiques à déport nul.

Il est entendu par profils sismiques à déport nul que les traces sismiques correspondent à des ondes se propageant dans le sous-sol depuis un émetteur jusqu'à un récepteur situé au même endroit que l'émetteur. Dans les cas très simples, dits 1D, les ondes suivent un même trajet, pouvant être selon une seule direction verticale, lors de leur propagation depuis un émetteur vers un réflecteur situé en surface et lors de leur propagation depuis le réflecteur jusqu'au détecteur. En milieu complexe, le trajet aller-retour peut être plus compliqué mais il peut être géré par les outils existants d'imagerie profondeur. Il est courant d'appeler ce type de profils sismiques des traces à « offset » nul, selon la terminologie anglo-saxonne correspondant à un déport nul entre émetteur et récepteur. Lorsque émetteurs et récepteurs ne sont pas localisés au même endroit, un traitement numérique connu permet de reconstituer un jeu de données sismiques correspondant à un profil sismique à déport nul.

L'avantage des profils sismiques à déport nul est qu'ils permettent de simplifier les calculs d'un facteur 10⁴ par rapport à des traces sismiques obtenues lorsque les récepteurs sont décalés par rapport au récepteur.

De manière avantageuse, le modèle de vitesse courant peut être choisi comme étant le modèle de vitesse d'origine.

Ce choix particulier présente l'avantage de ne nécessiter aucune étape particulière d'estimation d'un modèle de vitesse, ce qui simplifie le procédé. Il est également avantageux car le modèle de vitesse courant optimisé recherché est destiné à modéliser au mieux le milieu de l'image de contrôle. Le modèle de vitesse d'origine, ayant servi à produire l'image sismique de contrôle, constitue ainsi un point de départ pertinent pour converger vers un modèle perfectionné grâce au procédé de l'invention.

Selon un mode de réalisation, la transformation par démigration de l'étape d) peut être constituée d'une première étape de démigration sur le premier niveau de capture à l'aide du modèle de vitesse courant suivie d'une seconde étape de correction par étalonnage sur le deuxième niveau de capture à l'aide du modèle de vitesse courant.

En principe, il peut être plus commode de réaliser la transformation par démigration de l'étape d) en une seule étape en effectuant une démigration directement sur le deuxième niveau de capture. Cependant, il est aussi possible de procéder d'abord à une transformation par démigration sur le premier niveau de capture, puis de mettre en oeuvre un « datuming » depuis le premier niveau de capture vers le deuxième niveau de capture afin d'obtenir une portion de trace sismique de référence transformée ayant une origine des temps située à une position correspondant à celle du deuxième niveau de capture.

Selon un mode de réalisation avantageux, les étapes d) à f) du procédé peuvent être répétées itérativement un nombre choisi de fois, le modèle de vitesse courant optimisé déterminé à l'issue d'une itération servant de modèle de vitesse courant à l'itération suivante.

L'itération des étapes d) à f) permet de faire converger le modèle de vitesse courant optimisé vers un modèle de plus en plus cohérent par rapport aux différences entre les traces sismiques de référence et de contrôle. Le nombre d'itérations peut être choisi selon un critère de temps de calcul, ou bien selon un critère de seuil de différence entre les valeurs d'un modèle de vitesse courant et un modèle de vitesse optimisé à l'issue d'une itération.

Notamment, le niveau de référence et le ou les niveaux de capture peuvent être redéfinis au début de chaque itération du procédé.

De la sorte, il est possible de converger plus rapidement lors du calcul du modèle de vitesse courant optimisé, en définissant des niveaux de plus en plus fins pour les étapes de démigration, de « datuming » et de sélection de portions de traces sismiques. Il est aussi possible d'accélérer le procédé en réduisant le nombre de niveaux de capture dans une boucle d'itération, lorsqu'il s'avère que le modèle de vitesse ne change que d'un faible pourcentage localement d'une itération à la suivante.

Selon un mode de réalisation avantageux plusieurs niveaux de capture allant successivement, par profondeur croissante suivant l'échelle profondeur, d'un premier niveau de capture à un dernier niveau de capture peuvent être définis entre l'étape a) et l'étape b). À l'issue de l'étape e), une étape g) est mise en oeuvre durant laquelle le deuxième niveau de capture peut être nommé premier niveau de capture et le troisième niveau de capture peut être nommé deuxième niveau de capture. Les étapes c) à g) peuvent être mises en oeuvre itérativement jusqu'à ce que le dernier niveau de capture soit nommé premier niveau de capture.

En définissant une pluralité de niveaux de capture, il est possible de concentrer les efforts de calcul sur les zones du milieu comprenant le plus de changements entre l'image de référence et l'image de contrôle. De tels changements peuvent notamment coïncider avec des discontinuités. Le procédé de l'invention peut alors différencier le nombre d'itérations en fonction des changements subis localement au cours du temps, afin de reconstituer un modèle localement plus fiable reflétant mieux les modifications locales du modèle de vitesse.

En traitant les traces sismiques d'une image sismique portion par portion suivant des niveaux de capture successifs, l'invention permet de corriger de proche en proche des erreurs dans un modèle de vitesse. Le procédé de l'invention ne souffre pas des inconvénients de l'art antérieur du traitement 4D. Le procédé de l'invention ne dépend pas d'hypothèses 1D sur le milieu et ne restreint pas la propagation des ondes dans des directions purement verticales.

L'invention se rapporte également à un produit programme d'ordinateur comportant des instructions pour la mise en oeuvre des étapes a) à f) du procédé, lorsque ce programme est exécuté par un processeur.

### DESCRIPTIF DES FIGURES

Le procédé objet de l'invention, sera mieux compris à la lecture de la description qui suit d'exemples de réalisations présentés à titre illustratif, aucunement limitatifs, et à l'observation des dessins ci-après sur lesquels :
- la figure 1 est une représentation schématique de rais se propageant dans un milieu géologique entre des émetteurs et récepteurs d'ondes sismiques; et
- la figure 2 est une représentation schématique d'un milieu géologique découpé par des niveaux de capture plans; et
- la figure 3 est un ordinogramme représentant six étapes du procédé de traitement d'images sismiques; et
- la figure 4 est une représentation schématique de traces sismiques sur une image de référence et une image de contrôle ; et
- la figure 5 est une représentation schématique de traces sismiques sur une image de contrôle transformées par « démigration » et à l'aide d'un modèle de vitesse d'origine; et
- la figure 6 est une représentation schématique de traces sismiques sur une image de référence transformées par « démigration » à l'aide d'un modèle de vitesse courant; et
- la figure 7 est une représentation schématique des traces sismiques de contrôle traitées de la figure 5, corrigées par « datuming » à l'aide du modèle de vitesse courant; et
- la figure 8 est une représentation schématique de portions de traces sismiques de référence et de contrôle mises côte à côte en vue de déterminer un facteur correctif pour le modèle de vitesse courant ; et
- la figure 9 est un ordinogramme représentant l'itération du procédé de traitement d'images sismiques.

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

Afin de fournir un modèle du sous-sol, l'invention a d'abord recours à l'imagerie profondeur avant addition 3D qui est une version simplifiée de l'inversion 3D (« full-wave inversion » ou FWI en anglais). Un modèle de vitesse est initialement déterminé dans cette technique d'imagerie en 3D. Au moins une trace sismique de chaque point de tir, ou point d'émission, est ensuite « migrée » dans le modèle de vitesse déterminé. La migration consiste à transformer des données représentées dans une échelle temps en données positionnées sur une échelle profondeur. L'opération de positionnement sur une échelle profondeur des traces mesurées lors des phases d'acquisition est donc déléguée à cette étape d'imagerie profondeur 3D. Cette opération est l'équivalent théorique d'une première itération de FWI. Il est désormais tout à fait standard et classique de fournir de telles images « migrées » profondeur au cours d'une étude de sismique 4D.

En se situant en aval de ce processus d'imagerie profondeur, l'invention bénéficie par rapport à la FWI d'une réduction de dimensionnalité. En effet ces images migrées, obtenues en traitant des données issues d'un grand nombre de points d'émission comportant chacun un grand nombre de récepteurs, sont conceptuellement équivalentes à une image produite par migration « zéro-offset », en ne considérant que des traces sismiques « zéro-offset » dans lesquelles points sources et récepteurs sont confondus. Les processus d'imagerie, de migration et de démigration dits « zéro-offset » sont connus depuis longtemps et sont plusieurs ordres de grandeur moins coûteux que les processus par points d'émission (« pré-stack » en anglais).

L'invention décrite ci-dessous, se positionne en aval de l'obtention d'images migrées profondeur avant addition (« stack » en anglais), et fait l'hypothèse conceptuellement admissible que ces images sismiques dites de référence et de contrôle peuvent relever de processus de démigration, datuming et autres, qualifiés de « zéro-offset ».

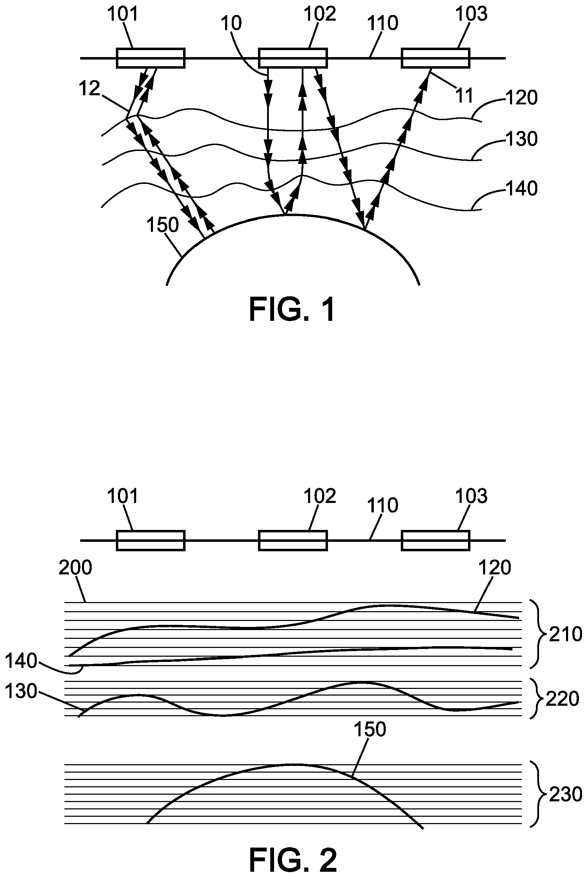

Afin de fournir un modèle du sous-sol, le procédé de l'invention s'appuie sur des données obtenues par sismique réflexion. Comme illustré sur la figure 1, la sismique réflexion utilise des émetteurs et récepteurs 101, 102, 103 de signaux sismiques. Les ondes sismiques émises se propagent dans un milieu dans les trois directions de l'espace. Les rais 10 et 11 de la figure 1 illustrent des exemples de trajectoires qu'empruntent ces ondes. Les discontinuités 120, 130, 140 et 150 du milieu sont à l'origine de réflexions et réfractions de ces ondes, qui peuvent être déviées et enregistrées en surface en un point éloigné de leur lieu d'émission, tel que représenté par le rai 11.

Les ondes sismiques se propageant dans le sous-sol sont des ondes sphériques. Par conséquent, le rai 12 de la figure 1 illustre une propagation possible entre une source 101 et un détecteur situé au même endroit que la source 101. Le rai 10 illustre une propagation classique 1D selon une seule direction verticale.

L'invention présentée ci-après peut être mise en oeuvre sur des données sismiques issues de mesures se rapportant à des rais analogues par exemple à l'un quelconque des rais 10, 11, 12 présentés sur la figure 1. L'originalité de l'invention réside dans l'utilisation de techniques simples permettant d'extraire une information fiable sans effectuer des approximations grossières à 1D sur la structure du sous-sol.

Un changement des propriétés du milieu se répercute sur les données sismiques par une variation dans la trace sismique enregistrée. Un changement de propriétés peut survenir localement suite à l'exploitation d'un gisement d'hydrocarbures délimité par exemple par la discontinuité 150.

Comme illustré sur la figure 2, l'invention propose de délimiter des zones dans le milieu imagé pour concentrer les efforts de traitement des données sur les zones contenant le plus de discontinuités 120, 130, 140, 150, et notamment les zones qui subissent le plus de changements de propriétés au cours du temps. Pour ce faire, un ensemble de niveaux de captures plans 210, 220, 230 permettent de constituer un maillage artificiel du milieu. Un premier niveau de capture 200 utilisé lors de la mise en oeuvre de l'invention est appelé plan de référence. Ce plan est avantageusement choisi de telle sorte qu'il n'y ait pas de modifications du milieu dans la zone comprise entre la portion de trace sismique étudiée et ce niveau de référence 200. Le niveau de référence 200 constitue ainsi avantageusement un niveau situé au-dessus d'une première perturbation du milieu.

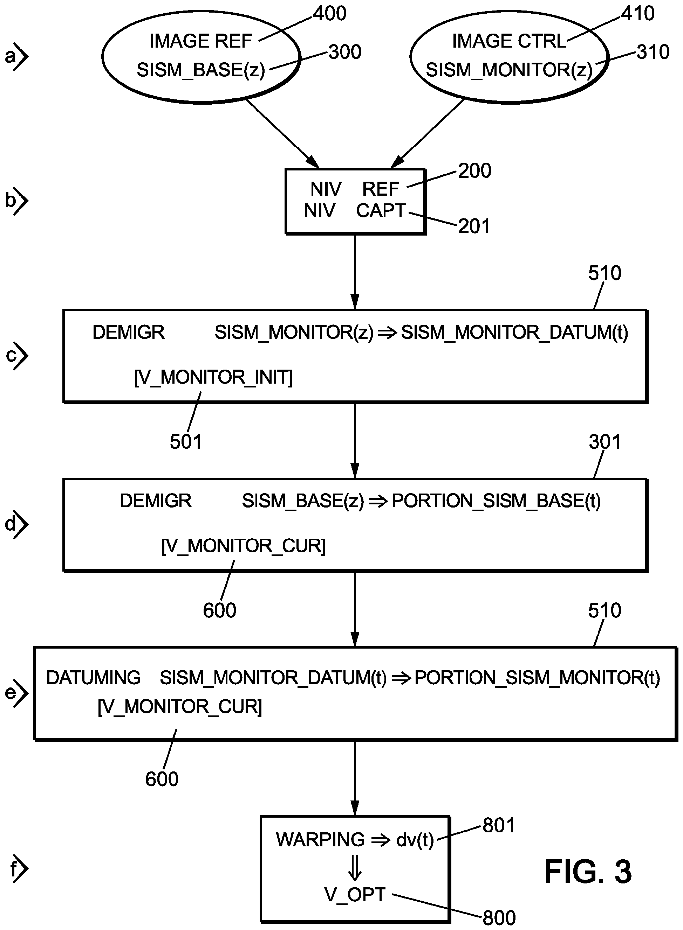

Le procédé de l'invention fait intervenir deux jeux de données sismiques d'un même milieu, traités en au moins six étapes illustrées sur la figure 3. Un premier jeu de données sismiques est issu d'une image de référence 400, et l'autre d'une image de contrôle 410, les deux jeux de données étant acquis à des temps différents. Les étapes a) à f) de la figure 3 sont effectuées au moins une fois au cours du procédé.

L'étape a) du procédé consiste à recevoir une image sismique de référence et au moins une image sismique de contrôle. Ces images peuvent comprendre une pluralité de traces sismiques représentées sur une échelle profondeur associée à des coordonnées z. Bien que non représenté, un détecteur d'ondes sismiques détecte initialement des données correspondant à des amplitudes d'ondes sismiques évoluant au cours du temps. La représentation en échelle temps est modifiée par une transformation appelée « migration » en appliquant un modèle de vitesse pour obtenir des traces sismiques représentées dans une échelle profondeur. Un premier modèle de vitesse est utilisé pour obtenir les traces sismiques de l'image de référence et un autre modèle de vitesse, qui peut être un modèle de vitesse dit d'origine est utilisé pour transformer par « migration » ou « migrer » les traces sismiques de l'image de contrôle. On note ici que le modèle ayant servi à fournir l'image de contrôle est un candidat naturel pour servir de point de départ, de modèle d'origine pour les étapes b) à f). Les modèles de vitesse sont choisis selon des critères standard en géophysique.

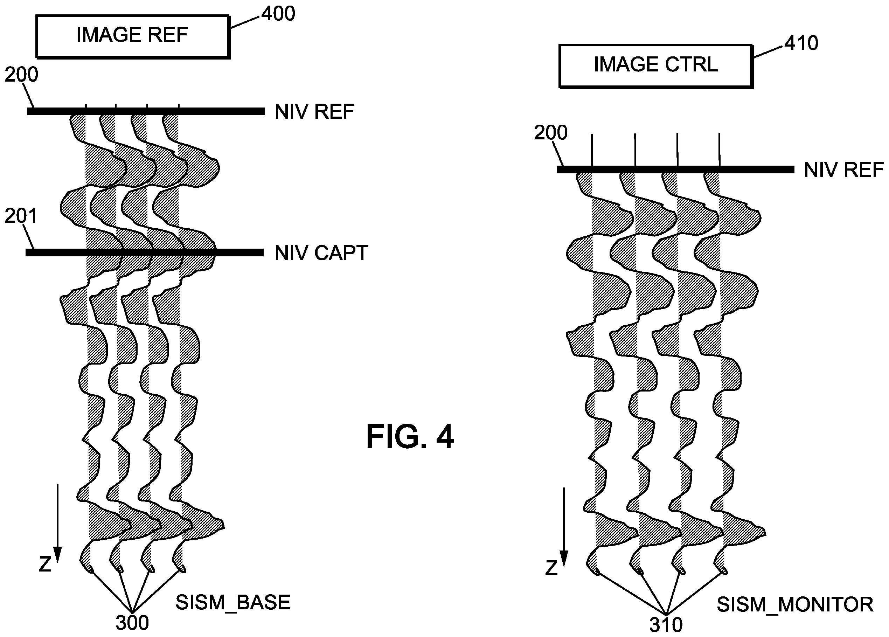

L'étape b) consiste à définir un premier niveau de capture 200 et au moins un deuxième niveau de capture 201. La figure 4 représente quatre traces sismiques 300 sur l'image de référence 400 et quatre traces sismiques 310 sur l'image de contrôle 410. Comme illustré sur la figure 4, un premier niveau de capture 200 peut être défini au choix sur une trace sismique de l'image de référence ou bien sur une trace sismique de l'image de contrôle. Un deuxième niveau de capture 201 est de préférence défini sur une trace sismique de l'image de référence, la position sur l'échelle profondeur du deuxième niveau de capture 201 n'étant ainsi pas influencée par le modèle de vitesse choisi pour constituer les traces sismiques de l'image de contrôle.

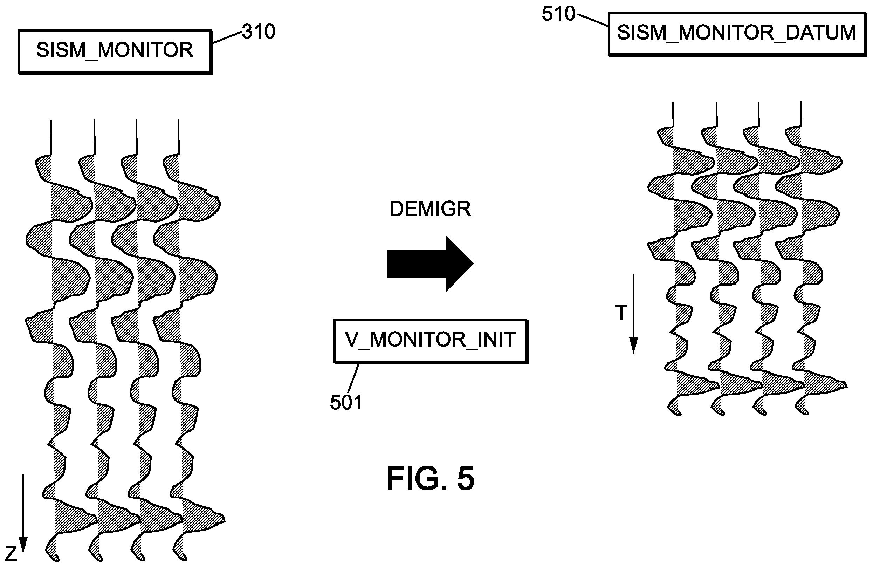

L'étape c) du procédé consiste à transformer une ou la trace sismique 310 de l'image de contrôle 410 des données sur le premier niveau de capture 200. Cette opération s'appelle « démigration » et est une opération inverse de la migration. La démigration transforme des traces sismiques de l'échelle profondeur à l'échelle temps à l'aide d'un modèle de vitesse. L'opération de « datuming » lui est fortement apparentée et utilise essentiellement les mêmes outils. Le « datuming » consiste à transporter un ensemble de traces sismiques en échelle temps, enregistrées à un niveau de départ, vers un niveau d'arrivée, comme si elles avaient été enregistrées à ce nouveau niveau. Les opérations de démigration et de « datuming » ne se font généralement pas trace à trace, mais convertissent un ensemble de traces de départ en un nouvel ensemble de départ. Dans le cas d'un « déport » nul, qui nous intéresse ici, ces conversions sont réversibles. Après démigration à partir de l'image de contrôle 410, le premier niveau de capture 200 s'appelle alors « datum » de la trace sismique de contrôle ainsi corrigée. À l'issue de cette démigration les données sont représentées comme si elles étaient reçues au premier niveau de capture 200. L'opération de transformation par démigration de l'étape c) peut être effectuée par tout moyen connu, comme par exemple par correction statique ou par application des équations de propagation. La figure 5 illustre cette étape. La transformation des traces sismiques représentées dans l'échelle profondeur en des traces sismiques représentées dans une échelle temps s'effectue à l'aide d'un modèle de vitesse d'origine 501. Ainsi, à l'issue de l'étape c) une trace sismique de contrôle transformée en échelle temps 510 est obtenue.

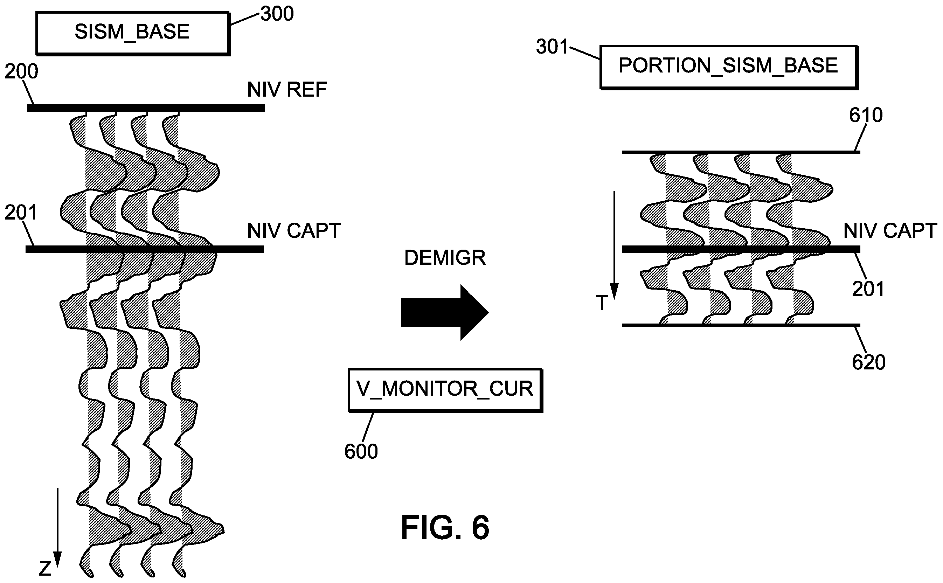

L'étape suivante d) consiste à effectuer une opération de démigration ou bien une double opération de démigration et « datuming » sur (ou vers) le deuxième niveau de capture 201 d'une ou de la trace sismique 300 de l'image de référence 400, en utilisant un modèle de vitesse courant 600. La figure 6 illustre un mode de réalisation dans lequel une conversion est effectuée pour transformer par démigration les traces sismiques 300 en échelle profondeur de l'image de référence 400 en un ensemble de traces 301 en échelle temps associées à un même niveau de capture 201.

La conversion de traces 300 en traces 301 peut se faire soit en deux temps, par démigration vers le niveau de référence puis « datuming » vers le niveau de capture, soit en une seule étape par démigration vers le deuxième niveau de capture 201.

Comme illustré sur la figure 6, la démigration ou démigration suivie d'un « datuming » de l'étape d) peut être effectuée sur une portion de la ou des trace sismiques de référence 300. Ainsi, une ou des portions de traces sismiques de référence transformées peuvent être obtenues à l'issue de l'étape d). Ces portions ont une même origine des temps, située au deuxième niveau de capture 201, et sont délimitées entre deux bornes 610 et 620 de part et d'autre du deuxième niveau de capture 201. Le choix des bornes 610, 620 est du ressort de l'utilisateur du procédé. Il convient par ailleurs de remarquer qu'il peut être avantageux de prévoir des portions de taille suffisamment grande en espaçant les bornes 610, 620. En effet, en cas de mise en oeuvre itérative de l'invention sur une pluralité de niveaux de captures différents, un recouvrement entre portions voisines fournit un moyen de vérification de la cohérence des modèles de vitesse obtenus au niveau de portions de traces sismiques adjacentes sur des niveaux de capture qui se succèdent.

Il apparaît à l'issue de cette étape que la trace sismique de contrôle transformée 510 est représentée sur une échelle temps, sur le même « datum » que la portion 301 de la trace sismique de référence transformée. Le « datum » définit une nouvelle origine des temps sur l'échelle temps. Ainsi, des données situées de part et d'autre du « datum » possèdent des coordonnées en temps de signes opposés. Cependant, ces deux traces ne sont pas encore comparables car les transformations des traces de l'image de référence et des traces de l'image de contrôle ont été effectuées à l'aide de deux modèles de vitesse 501, 600 différents.

Elles seraient comparables si les deux modèles de vitesse 501 et 600 utilisés étaient les modèles de vitesse réels respectifs qui ne sont pas connus. Ces traces seraient relativement comparables et ne différeraient que d'un simple décalage temporel graduel qu'il serait possible de traiter par des méthodes d'analyse classiques, si le milieu était strictement stratifié 1D. Or l'imagerie 4D ne se situe pas dans ces deux cas particuliers. De façon générale, ces deux traces ne sont comparables que pour une fenêtre temporelle limitée autour du temps zéro de l'échelle des temps associé au « datum ». L'idée de base exploitée dans l'étape suivante e) est justement qu'un décalage temporel est mesurable, 1D, dans une fenêtre temporelle centrée sur le temps zéro après « démigration » ou « datuming ». Il suffit de créer une fenêtre temporelle centrée sur un zéro à un nombre suffisant de niveaux de capture pour pouvoir rendre comparables les deux traces.

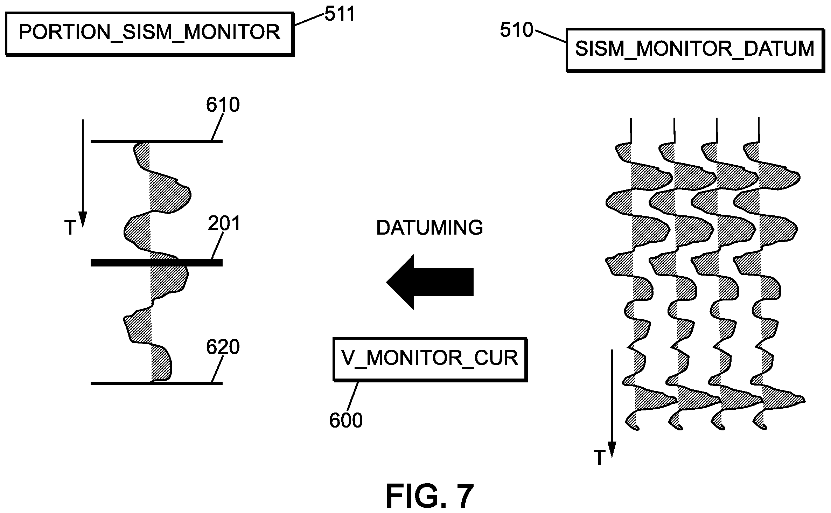

L'étape e) effectue une opération supplémentaire permettant de rendre comparables la portion 301 de la trace sismique de référence transformée et la trace sismique de contrôle transformée 510. Cette étape, illustrée sur la figure 7 consiste à effectuer une seconde transformation par « datuming » sur le deuxième niveau de capture 201 d'une ou de la trace sismique de contrôle transformée 510 en utilisant cette fois le modèle de vitesse courant 600. À l'instar de ce qui a été réalisé à l'étape d), l'étape e) peut impliquer la sélection d'une portion de trace sismique afin d'obtenir une nouvelle portion 511 de trace sismique de contrôle transformée. Cette nouvelle portion 511 de trace sismique de contrôle transformée 511 correspond à une portion ayant pour origine des temps le deuxième niveau de capture 201, et est délimitée entre deux bornes 610, 620, identiques aux bornes 610, 620 pouvant être définies à l'étape d).

Il convient de remarquer que la définition de bornes 610, 620 dans les étapes d) et e) est une étape facultative. La présence de ces bornes permet de simplifier la manipulation des données en réduisant le nombre de données à traiter, notamment lorsque les traces sismiques complètes impliquent des quantités de données importantes.

À l'issue de l'étape e), la portion 301 et la nouvelle portion 511 de traces sismiques ont été obtenues par « datuming » sur un même niveau plan à l'aide du modèle de vitesse courant 600. Elles sont donc comparables car elles sont toutes deux représentées en échelle temps, dans une fenêtre temporelle centrée sur une même origine des temps correspondant au deuxième niveau de capture 201.

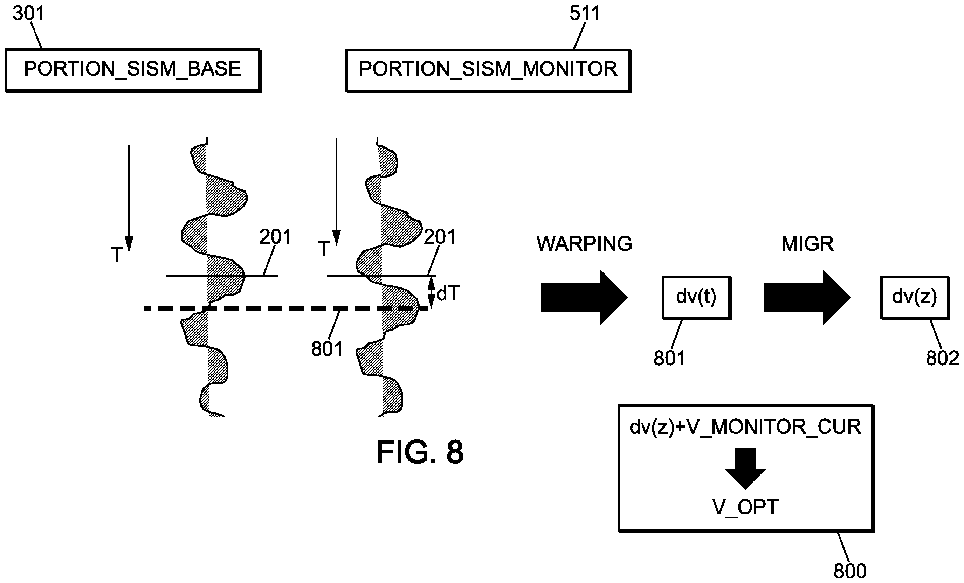

Comme illustré sur la figure 8, le procédé emploie ensuite à l'étape f) une technique de comparaison permettant de déterminer des retards entre composantes correspondantes des portions des traces sismiques 301 et 511 en vue d'extraire un facteur correctif de la vitesse. Ce facteur correctif peut ensuite être utilisé par des procédés connus comme par exemple un procédé d'imagerie simple pour déterminer la valeur qu'il convient de rajouter à la vitesse du modèle de vitesse courant 600 pour le mettre à jour et obtenir un modèle de vitesse courant optimisé 800.

Un moyen particulièrement simple de mise en oeuvre de l'étape f) à l'aide de méthodes existantes consiste à mesurer un décalage global en temps dT entre les deux portions 301 et 511 de traces sismiques. Comme illustré sur la figure 8, les portions 301 et 511 sont des portions de traces sismiques représentées en échelle temps dans une même fenêtre temporelle, pouvant par exemple être délimitée par les bornes 610 et 620. Cependant, les signaux des deux portions 301, 511 correspondant à deux parcours d'une onde sismique suivant un même trajet dans un même milieu, mesurés à deux instants différents, se ressemblent fortement au voisinage du deuxième niveau de capture 201. Pour estimer le décalage dT entre ces deux portions, il est par exemple possible d'utiliser des techniques connues de corrélation entre traces sismiques. De cette manière, il est possible d'identifier sur la nouvelle portion de trace sismique de contrôle 511 le niveau 810 associé au signal correspondant sur le deuxième niveau de capture 201 sur la portion de trace sismique de référence 301.

Le décalage dT identifié peut être converti en une vitesse en utilisant par exemple une technique dite de « warping ». La vitesse dv(t) peut ensuite être migrée pour obtenir une vitesse dv(z) qui peut être rajoutée au modèle de vitesse courant 600.En plus des techniques connues de l'art antérieur pour déterminer un facteur correctif d'un modèle de vitesse à partir d'un décalage en temps entre deux portions de traces sismiques, l'invention propose deux méthodes différentes pour réaliser l'étape f).

Une première méthode de mise en oeuvre de l'étape f) consiste à identifier la fonction dv(t) des différences de vitesse permettant de transformer point par point la portion 301 de trace sismique de référence transformée en la portion 511 de trace sismique de contrôle transformée. Cette opération s'appelle communément « warping » selon la terminologie anglo-saxonne, et est une méthode connue courante en géophysique. La fonction dv(t) 801 peut être représentée comme une trace des variations de vitesse dans l'échelle temps. Il convient alors pour convertir cette fonction dans l'échelle profondeur de la transformer par migration. Cette migration vers l'échelle profondeur peut avantageusement se faire à l'aide du modèle de vitesse courant 600, pour obtenir une trace des variations de vitesse dv(z) 802 dans l'échelle profondeur. Il suffit alors de rajouter pour chaque coordonnée z le terme dv(z) correspondant aux valeurs correspondantes du modèle de vitesse courant 600 pour obtenir le modèle de vitesse optimisé 800.

Une alternative de mise en oeuvre de l'étape f) consiste dans un premier temps à trouver la même fonction dv(t) 801 par « warping ». Ensuite, une transformation vers l'échelle profondeur est mise en oeuvre par une technique communément appelée «migration d'attributs» en géophysique. Cette technique consiste à choisir une trace sismique quelconque représentée dans l'échelle temps, par exemple l'une des deux portions 301 ou 511. Cette trace choisie sert alors de trace support. La trace support est migrée à l'aide du modèle de vitesse courant 600. Une seconde migration à l'aide du modèle de vitesse courant 600 est effectuée sur une trace support modifiée par multiplication terme à terme par la fonction dv(t). Pour obtenir le facteur correctif dv(z) 802 du modèle de vitesse courant 600, il suffit d'effectuer le rapport entre la trace support modifiée migrée, et la trace support migrée. Le modèle de vitesse courant optimisé 800 est obtenu en ajoutant au modèle de vitesse courant 600 le facteur correctif 802.

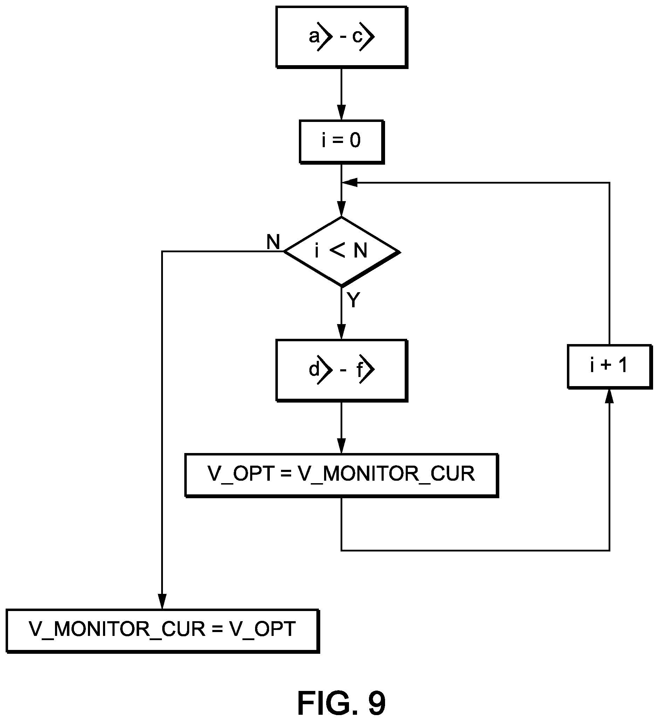

Il a été décrit ci-avant une mise en oeuvre du procédé en une seule fois sans répétitions. Il est cependant possible de perfectionner le procédé en effectuant les étapes d) à f) de manière itérative, comme illustré sur l'ordinogramme de la figure 9. Cette itération s'effectue en remplaçant, à l'issue d'une boucle d'itération, le modèle de vitesse courant 600 qui va servir à la boucle d'itération suivante, par le modèle de vitesse courant optimisé 800 déterminé. Chaque boucle d'itération fait converger le modèle de vitesse courant optimisé vers une valeur plus représentative du milieu correspondant aux données de l'image de contrôle.

Le nombre d'itérations N peut être choisi selon divers critères. Il est par exemple possible de le fixer à une valeur prédéterminée, correspondant à un compromis entre temps de traitement et fiabilité du résultat obtenu. Il est également possible de déterminer une valeur seuil de différence entre le modèle de vitesse courant 600 et le modèle de vitesse courant optimisé 800. En définissant une valeur seuil de différence, il est possible de cesser une itération lorsque la différence est inférieure audit seuil. Il est ainsi possible de ne mettre en oeuvre le procédé que localement dans les portions de traces sismiques pour lesquelles subsistent des écarts importants entre modèle de vitesse courant et modèle de vitesse courant optimisé, et cesser le procédé dans les portions de traces sismiques comprenant peu de variations entre les deux modèles de vitesse.

À ce titre, il convient de préciser que le procédé peut être mis en oeuvre en redéfinissant les positions sur l'échelle profondeur des niveaux plans après chaque itération. Une telle redéfinition de la position des niveaux plans permet de réduire davantage encore la durée du traitement selon l'invention, et concentrer les efforts de calcul dans les zones du milieu comprenant le plus de changement. Elle permet également d'affiner le modèle sélectivement dans les zones où les variations du modèle de vitesse au court du temps sont les plus faibles, et nécessitent une résolution élevée.

Un deuxième niveau d'itération peut également être mis en oeuvre à l'aide du procédé. Ce deuxième niveau d'itération consiste à mettre en oeuvre le procédé sur différentes portions des traces sismiques de contrôle et de référence. En définissant plusieurs niveaux de capture allant d'un premier niveau de capture proche du point d'émission des ondes sismiques jusqu'à un dernier niveau de capture, le procédé effectue un maillage des signaux sismiques. Le procédé est mis en oeuvre de proche en proche pour des portions de traces sismiques transformées par démigration et corrigées par « datuming » sur des niveaux de capture successifs. Cet effeuillage des données sismiques s'effectue de telle sorte qu'à l'issue de l'étape f), une nouvelle étape g) est introduite de telle sorte que les niveaux de capture sont renumérotés. Ainsi, à l'issue de la première itération, le deuxième niveau de capture est nommé premier niveau de capture et le troisième niveau de capture est nommé deuxième niveau de capture. De cette manière, le procédé permet de transformer de proche en proche les données jusqu'à ce que le dernier niveau de capture initialement défini soit nommé premier niveau de capture.

L'invention se rapporte également à un produit programme d'ordinateur mettant en oeuvre les étapes a) à f) décrites ci-avant, notamment lorsque ces étapes sont mises en oeuvre à l'aide d'un processeur d'ordinateur.

L'invention ne se limite pas aux modes de réalisation décrits ci-avant et peut être déclinée dans des modes de réalisation alternatifs.

Notamment, bien qu'une pluralité de niveaux de captures 210, 220, 230 ait été représentée sur la figure 2, l'invention peut tout à fait permettre un suivi efficace et suffisant d'un milieu à partir de deux niveaux plans constitués d'un niveau de référence et un seul deuxième niveau de capture. Il peut en outres être avantageux de réduire le nombre de niveaux de capture en vue de réduire la durée de mise en oeuvre du procédé.

Le modèle de vitesse courant choisi initialement peut être par exemple le modèle de vitesse d'origine utilisé pour « démigrer » les traces sismiques de l'image de contrôle. Cependant, il est possible de choisir comme point de départ tout autre modèle de vitesse courant, par exemple le premier modèle de vitesse ayant servi à « migrer » les traces de l'image de référence. Tout autre modèle de vitesse, par exemple un modèle de vitesse intermédiaire entre le premier modèle de vitesse et le modèle de vitesse d'origine peut également être choisi.

L'invention décrite ci-avant s'applique préférentiellement à des profils sismique à déport nul, également appelés profils sismiques à « offset » nul en anglais, c'est-à-dire des données correspondant à des ondes sismiques suivant un trajet « autocollimatant » depuis une source vers un réflecteur dans le sous-sol et revenant par le même trajet vers un récepteur situé au même endroit que la source. Cependant, il est aussi envisageable de mettre en oeuvre l'invention sur des données sismiques à « offset » non nul, c'est-à-dire à déport non nul entre émetteur et récepteur.

Le procédé décrit ci-avant a été appliqué à un couple de données sismique de référence et de contrôle. Il est bien entendu possible de mettre en oeuvre ce procédé de manière successive sur plusieurs paires de données sismiques en vue de suivre sur une durée importante image par image l'évolution d'un milieu.

## Revendications

1. Procédé mis en oeuvre sur un processeur de traitement d'une image sismique de référence (400) d'un milieu et d'une image sismique de contrôle (410) dudit milieu, l'image sismique de référence (400) comprenant au moins une trace sismique (300) décrite dans une échelle profondeur, l'image sismique de contrôle (410) comprenant au moins une trace sismique (310) décrite dans l'échelle profondeur, le procédé comprenant les étapes suivantes :
a) recevoir l'image sismique de référence (400) et l'image sismique de contrôle (410) ; et
b) définir au moins un premier niveau de capture (200) plan situé sur l'une des traces parmi la trace sismique (300) de l'image de référence et la trace sismique (310) de l'image de contrôle, et au moins un deuxième niveau de capture (201) plan sur la trace sismique (300) de l'image de référence ; et
c) transformer une portion continue de la trace sismique (310) de l'image de contrôle par démigration sur le premier niveau de capture (200) à l'aide d'un modèle de vitesse d'origine (501), en une trace sismique (510) de contrôle transformée décrite dans une échelle temps ; et
d) transformer une portion continue de la trace sismique (300) de l'image de référence comprenant le deuxième niveau de capture (201) par démigration sur le deuxième niveau de capture (201) à l'aide d'un modèle de vitesse courant (600), en portion (301) de trace sismique de référence transformée décrite dans l'échelle temps ; et
e) corriger la portion de la trace sismique de contrôle transformée par étalonnage sur le deuxième niveau de capture (201) à l'aide du modèle de vitesse courant (600) en une nouvelle portion (511) de trace sismique de contrôle transformée décrite dans l'échelle temps ; et
f) déterminer un modèle de vitesse courant optimisé (800) par ajout, au modèle de vitesse courant (600), d'un facteur correctif du modèle de vitesse courant (600) déterminé à partir d'un décalage en temps entre la portion (301) de la trace sismique de référence transformée et la nouvelle portion (511) de trace sismique de contrôle transformée.

2. Procédé selon la revendication 1, **caractérisé en ce que** l'étape f) comprend :
- calculer une fonction dv(t) (801) représentant l'évolution dans le temps de la vitesse instantanée permettant de transformer la portion (301) de trace sismique de référence transformée en la nouvelle portion (511) de trace sismique de contrôle transformée ;
- transformer la fonction dv(t) (801) en une fonction dv(z) (802) représentant la valeur de la vitesse instantanée sur l'échelle profondeur, à l'aide du modèle de vitesse courant (600), la fonction dv(z) (802) formant un facteur correctif du modèle de vitesse courant (600).

3. Procédé selon la revendication 1, **caractérisé en ce que** l'étape f) comprend :
- calculer une fonction dv(t) (801) représentant l'évolution dans le temps de la vitesse instantanée permettant de transformer la portion (301) de trace sismique de référence transformée en la nouvelle portion (511) de trace sismique de contrôle transformée ;
- multiplier la fonction dv(t) (801) par l'une quelconque des traces sismiques décrites dans l'échelle temps, ladite trace sismique décrite dans l'échelle temps formant une trace support ;
- transformer à partir du modèle de vitesse courant (600) la trace support et la trace support multipliée par la fonction dv(t) (801) en des deuxièmes et troisièmes traces transformées décrites dans l'échelle profondeur;
- déterminer un facteur correctif dv(z) (802) représentant les valeurs de la vitesse instantanée sur l'échelle profondeur, du modèle de vitesse courant (600), ledit facteur étant le rapport entre les deuxièmes et troisièmes traces transformées décrites dans l'échelle profondeur.

4. Procédé selon l'une quelconque des revendications précédentes, **caractérisé en ce que** les traces sismiques de contrôle (310, 510, 511) et de référence (300, 301) sont des traces correspondant à des profils sismiques à déport nul.

5. Procédé selon l'une quelconque des revendications précédentes, **caractérisé en ce que** le modèle de vitesse courant (600) est choisi comme étant le modèle de vitesse d'origine (501).

6. Procédé selon l'une quelconque des revendications précédentes, **caractérisé en ce que** la transformation par démigration de l'étape d) est constituée d'une première étape de démigration sur le premier niveau de capture à l'aide du modèle de vitesse courant suivie d'une seconde étape de correction par étalonnage sur le deuxième niveau de capture à l'aide du modèle de vitesse courant.

7. Procédé selon l'une quelconque des revendications précédentes, **caractérisé en ce que** les étapes d) à f) du procédé sont répétées itérativement un nombre choisi de fois, le modèle de vitesse courant optimisé (800) déterminé à l'issue d'une itération servant de modèle de vitesse courant (600) à l'itération suivante.

8. Procédé selon la revendication 7, **caractérisé en ce que** le premer niveau de capture (200) et le au moins un deuxième niveau de capture (201) sont redéfinis au début de chaque itération du procédé.

9. Procédé selon l'une quelconque des revendications précédentes, **caractérisé en ce que** :
- plusieurs niveaux de capture (201, 210, 220 ,230), allant successivement, par profondeur croissante suivant l'échelle profondeur, d'un premier niveau de capture (200) à un dernier niveau de capture, sont définis entre l'étape a et l'étape b) ; et **en ce que**
- à l'issue de l'étape f), une étape g) est mise en oeuvre au cours de laquelle le deuxième niveau de capture est nommé premier niveau de capture et le troisième niveau de capture est nommé deuxième niveau de capture,
les étapes c) à g) étant mises en oeuvre itérativement jusqu'à ce que le dernier niveau de capture soit nommé premier niveau de capture.

10. Produit programme d'ordinateur comportant des instructions pour la mise en oeuvre des étapes a) à f) du procédé de la revendication 1, lorsque ce programme est exécuté par un processeur.

## Patentansprüche

1. Auf einem Prozessor ablaufendes Verfahren zur Verarbeitung eines seismischen Referenzbildes (400) einer Umgebung und eines seismischen Kontrollbildes (410) der Umgebung, wobei das seismische Referenzbild (400) mindestens eine auf einer Tiefenskala beschriebene seismische Spur (300) aufweist, wobei das seismische Kontrollbild (400) mindestens eine auf der Tiefenskala beschriebene seismische Spur (310) aufweist, wobei das Verfahren die folgenden Schritte aufweist:
a) Empfangen des seismischen Referenzbildes (400) und des seismischen Kontrollbildes (410); und
b) Definieren mindestens einer ersten ebenen Erfassungsebene (200), die sich an einer der Spuren, ausgewählt aus der seismischen Spur (300) des Referenzbildes und der seismischen Spur (310) des Kontrollbildes, befindet und mindestens einer zweiten ebenen Erfassungsebene (201) an der seismischen Spur (300) des Referenzbildes; und
c) Transformieren eines kontinuierlichen Abschnitts der seismischen Spur (310) des Kontrollbildes durch Demigration auf die erste Erfassungsebene (200) mit Hilfe eines anfänglichen Geschwindigkeitsmodells (501) in eine auf einer Zeitskala beschriebene transformierte seismische Kontrollspur (510); und
d) Transformieren eines kontinuierlichen Abschnitts der seismischen Spur (300) des Referenzbildes, das die zweite Erfassungsebene (201) aufweist, durch Demigration auf die zweite Erfassungsebene (201) mit Hilfe eines aktuellen Geschwindigkeitsmodells (600) in einen auf einer Zeitskala beschriebenen transformierten seismischen Referenzspurabschnitt (301); und
e) Korrigieren des transformierten seismischen Kontrollspurabschnitt durch Eichung an der zweiten Erfassungsebene (201) mit Hilfe des aktuellen Geschwindigkeitsmodells (600) in einen neuen auf der Zeitskala beschriebenen transformierten seismischen Kontrollspurabschnitt (511); und
f) Bestimmen eines optimierten aktuellen Geschwindigkeitsmodells (800) durch Hinzufügen eines Korrekturfaktors des aktuellen Geschwindigkeitsmodells (600), der sich aus einer zeitlichen Abweichung zwischen dem Abschnitt (301) der transformierten seismischen Referenzspur und dem neuen transformierten seismischen Kontrollspurabschnitt (511) bestimmt, zu dem aktuellen Geschwindigkeitsmodell (600).

2. Verfahren nach Anspruch 1, **dadurch gekennzeichnet, dass** der Schritt f) aufweist:
- Berechnen einer Funktion dv(t) (801), die die zeitliche Entwicklung der momentanen Geschwindigkeit repräsentiert und erlaubt, den transformierten seismischen Referenzspurabschnitt (301) in den neuen transformierten seismischen Kontrollspurabschnitt (511) zu transformieren;
- Transformieren der Funktion dv(t) (801) in eine Funktion dv(z) (802), die den Wert der momentanen Geschwindigkeit auf der Tiefenskala repräsentiert, mit Hilfe des aktuellen Geschwindigkeitsmodells (600), wobei die Funktion dv(z) (802) einen Korrekturfaktor des aktuellen Geschwindigkeitsmodells (600) bildet.

3. Verfahren nach Anspruch 1, **dadurch gekennzeichnet, dass** der Schritt f) aufweist:
- Berechnen einer Funktion dv(t) (801), die die zeitliche Entwicklung der momentanen Geschwindigkeit repräsentiert und erlaubt, den transformierten seismischen Referenzspurabschnitt (301) in den neuen transformierten seismischen Kontrollspurabschnitt (511) zu transformieren;
- Multiplizieren der Funktion dv(t) (801) mit irgendeiner der auf der Zeitskala beschriebenen seismischen Spuren, wobei die auf der Zeitskala beschriebene seismische Spur eine Hilfsspur bildet;
- Transformieren der Hilfsspur und der mit der Funktion dv(t) (801) multiplizierten Hilfsspur ausgehend von dem aktuellen Geschwindigkeitsmodell (600) in zweite und dritte auf der Tiefenskala beschriebene transformierte Spuren;
- Bestimmen eines die Werte der momentanen Geschwindigkeit auf der Tiefenskala repräsentierenden Korrekturfaktors dv(z) (802) des aktuellen Geschwindigkeitsmodells (600), wobei der Faktor die Beziehung zwischen den auf der Tiefenskala beschriebenen zweiten und dritten transformierten Spuren ist.

4. Verfahren nach einem der vorstehenden Ansprüche, **dadurch gekennzeichnet, dass** die seismischen Kontrollspuren (310, 510, 511) und Referenzspuren (300, 301) Spuren sind, die seismischen Profilen mit einem Versatz von Null entsprechen.

5. Verfahren nach einem der vorstehenden Ansprüche, **dadurch gekennzeichnet, dass** das aktuelle Geschwindigkeitsmodell (600) als das anfängliche Geschwindigkeitsmodell (501) gewählt ist.

6. Verfahren nach einem der vorstehenden Ansprüche, **dadurch gekennzeichnet, dass** die Demigration-Transformation des Schritts d) aus einem ersten Schritt einer Demigration auf die erste Erfassungsebene mit Hilfe des aktuellen Geschwindigkeitsmodells besteht, gefolgt von einem zweiten Schritt einer Korrektur durch Eichung an der zweiten Erfassungsebene mit Hilfe des aktuellen Geschwindigkeitsmodells.

7. Verfahren nach einem der vorstehenden Ansprüche, **dadurch gekennzeichnet, dass** die Schritte d) bis f) des Verfahrens eine gewählte Anzahl von Malen iterativ wiederholt werden, wobei das optimierte aktuelle Geschwindigkeitsmodell (800), das als Ergebnis einer Iteration bestimmt wird, der darauffolgenden Iteration als aktuelles Geschwindigkeitsmodell (600) dient.

8. Verfahren nach Anspruch 7, **dadurch gekennzeichnet, dass** die erste Erfassungsebene (200) und die mindestens eine zweite Erfassungsebene (201) am Beginn jeder Iteration des Verfahrens neu definiert werden.

9. Verfahren nach einem der vorstehenden Ansprüche, **dadurch gekennzeichnet, dass**:
- mehrere Erfassungsebenen (201, 210, 220, 230), in laufender Folge von einer ersten Erfassungsebene (200) mit zunehmender Tiefe entlang der Tiefenskala zu einer letzten Erfassungsebene, zwischen dem Schritt a) und dem Schritt b) definiert werden; und dadurch, dass
- am Ende des Schritts f) ein Schritt g) durchgeführt wird, im Verlaufe dessen die zweite Erfassungsebene umbenannt wird in erste Erfassungsebene und die dritte Erfassungsebene umbenannt wird in zweite Erfassungsebene,
wobei die Schritte c) bis g) iterativ durchgeführt werden, bis die letzte Erfassungsebene in erste Erfassungsebene umbenannt ist.

10. Computerprogrammprodukt, aufweisend Befehle zum Durchführen der Schritte a) bis f) des Verfahrens nach Anspruch 1, wenn dieses Programm von einem Prozessor ausgeführt wird.

## Claims

1. Method implemented by a processor for processing a reference seismic image (400) of a medium and a control seismic image (410) of said medium, the reference seismic image comprising at least one seismic trace (300) described in a depth scale and the control seismic image (410) comprising at least one seismic trace (310) described in the depth scale, the method comprising the following steps:
a) receiving the reference seismic image (400) and the control seismic image (410); and
b) defining at least one first planar capture level (200) situated on one of the traces from among the seismic trace (300) of the reference image and the seismic trace (310) of the control image, and at least one second planar capture level (201) on the seismic trace (300) of the reference image; and
c) transforming a continuous portion of the seismic trace (310) of the control image by demigration on the first capture level (200) by means of an original velocity model (501), into a transformed control seismic trace (510) described in a time scale; and
d) transforming a continuous portion of the seismic trace (300) of the reference image comprising the second capture level (200) by demigration on the second capture level (200) by means of a current velocity model (600), into a transformed reference seismic trace portion (301) described in the time scale; and
e) correcting the portion of the transformed control seismic trace by calibration on the second capture level (200) by means of the current velocity model (600) in a new transformed control seismic trace portion (510) described in the time scale; and
f) determining an optimised current velocity model (800) by the addition, to the current velocity model (600), of a correction factor for the current velocity model (600) determined from an offset in time between the portion (301) of the transformed reference seismic trace and the new transformed control seismic trace portion (510).

2. Method according to claim 1, **characterised in that** step f) comprises:
- calculating a function dv(t) (801) representing the change over time in the instantaneous velocity making it possible to transform the transformed reference seismic trace portion (301) into the new transformed control seismic trace portion (510);
- transforming the function dv(t) (801) into a function dv(z) (802) representing the instantaneous velocity on the depth scale, by means of the current velocity model (600), the function dv(z) (802) forming a correction factor for the current velocity model (600).

3. Method according to claim 1, **characterised in that** step f) comprises:
- calculating a function dv(t) (801) representing the change over time in the instantaneous velocity making it possible to transform the transformed reference seismic trace portion (301) into the new transformed control seismic trace portion (510);
- multiplying the function dv(t) (801) by any one of the seismic traces described in the time scale, said seismic trace described in the time scale forming a support trace;
- transforming, using the current velocity model (600), the support trace and the support trace multiplied by the function dv(t) (801) into second and third transformed traces described in the depth scale;
- determining a correction factor dv(z) (802) representing the value of the instantaneous velocity on the depth scale, of the current velocity model (600), said factor being the ratio between the second and third transformed traces described in the depth scale.

4. Method according to any one of the preceding claims, **characterised in that** the control (310, 510, 511) and reference (300, 301) seismic traces are traces corresponding to zero-offset seismic profiles.

5. Method according to any one of the preceding claims, **characterised in that** the current velocity model (600) is chosen as being the original velocity model (501).

6. Method according to any one of the preceding claims, **characterised in that** the transformation by demigration of step d) consists of a first step of demigration on the first capture level by means of the current velocity model followed by a second correction step by calibration on the second capture level by means of the current velocity model.

7. Method according to any one of the preceding claims, **characterised in that** steps d) to f) of the method are repeated iteratively a chosen number of times, the optimised current velocity model (800) determined at the end of an iteration serving as a current velocity model (600) for the following iteration.

8. Method according to claim 7, **characterised in that** the reference level (200) and the capture level or levels (201) are redefined at the start of each iteration of the method.

9. Method according to any one of the preceding claims, **characterised in that**:
- a plurality of capture levels (201, 210, 220, 230), ranging successively, by increasing depth according to the depth scale, from a first capture level (200) to a last capture level, are defined between step a) and step b); and **in that**
- at the end of step f), a step g) is implemented during which the second capture level is named the first capture level and the third capture level is named the second capture level,
steps c) to g) being implemented iteratively until the last capture level is named the first capture level.

10. Computer program product containing instructions for implementing steps a) to f) of the method of claim 1, when this program is executed by a processor.
